# EUROPÄISCHE PATENTSCHRIFT

(11) **EP 1 561 734 B1**
(45) Veröffentlichungstag und Bekanntmachung des Hinweises auf die Patenterteilung: **29.03.2006**
(21) Anmeldenummer: 04450013.0
(22) Anmeldetag: 20.01.2004
(51) Int. Cl.: C04B 18/02

(54) **Leichtzuschlag für die Betonherstellung sowie Verfahren zu dessen Herstellung**
Lighweight aggregate for production of concrete and process of production
Agrégat léger pour la fabrication du béton et procédé de fabrication

(43) Veröffentlichungstag der Anmeldung: 10.08.2005
(73) Patentinhaber: Partlic, Georg, Dipl.-Ing., 8652 Kindberg (AT); Trenkwalder, Anton, 8670 Krieglach (AT)
(72) Erfinder: Partlic, Georg, Dipl.-Ing., 8652 Kindberg (AT); Trenkwalder, Anton, 8670 Krieglach (AT)
(74) Vertreter: Dungler, Karin

(56) Entgegenhaltungen:
- EP-A- 1 188 726
- US-A- 4 741 782
- US-B1- 6 334 895
- PATENT ABSTRACTS OF JAPAN Bd. 2002, Nr. 03, 3. April 2002 (2002-04-03) & JP 2001 328852 A (SUMITOMO METAL MINING CO LTD), 27. November 2001 (2001-11-27)
- CHEMICAL ABSTRACTS + INDEXES, AMERICAN CHEMICAL SOCIETY. COLUMBUS, US, 28. Januar 1991 (1991-01-28), XP000188175 ISSN: 0009-2258
- DATABASE WPI Section Ch, Week 198435 Derwent Publications Ltd., London, GB; Class L02, AN 1984-217055 XP002279976 & JP 59 128256 A (NODA PLYWOOD MFG CO LTD) 24. Juli 1984 (1984-07-24)

## Beschreibung

Die Erfindung betrifft einen Zuschlagstoff mit Leichtgesteinskörnung für die Betonherstellung bestehend aus einem hydraulischen Bindemittelgemisch sowie einem oder mehreren Zusatzstoffen. Die Erfindung betrifft weiters ein Verfahren zur Herstellung dieses Zuschlagstoffes.

Zuschlagstoffe der eingangs genannten Art sind aus der EP-A 1 188 726 bekannt. Gemäß dieser Lehre war man davon ausgegangen, natürlich vorkommende Zuschlagstoffe, wie Sand oder Kies zu ersetzen, da deren Einsatz von den jeweiligen geologischen Bedingungen abhängig ist. Der Ersatz dieser natürlich vorkommenden Zuschlagstoffe erfolgte mittels Abfallstoffen, beispielsweise aus dem Hüttenwesen. So wurde aus Hüttensand unter Zumengung von Zement ein Zuschlagstoff in Form einer losen Schüttung hergestellt. Dieser körnige Zusatzstoff ist zwar leicht handhabbar, da er sich bei der weiteren Betonherstellung in einfacher Weise dosieren lässt, jedoch sind dessen Abbindungseigenschaften mit dem Zementleim des Beton mitunter wenig zufriedenstellend.

Hier will die Erfindung Abhilfe schaffen.

Dokument US 4,741, 782 offenbart einen Leichtzuschlag mit homogenem kornaufbau, der aus einer Mischung von Zement, Schaum und Fungasche hergestellt wird.

Erfindungsgemäß wird ein Zuschlagstoff gemäß Anspruch 1 vorgeschlagen, welcher dadurch gekennzeichnet ist, dass im hydraulischen Bindemittelgemisch Asche mit einem Kalziumoxidanteil (Freikalkanteil) von 10 bis 20 Gew.-% bezogen auf 100 % Asche vorliegt. Dabei handelt es sich vorzugsweise um Asche, welche aus der Rinden- oder Holzverbrennung gewonnen wurde. Demgemäß können vorteilhafterweise Abfallstoffe, wie sie in der Papier- und Zellstoffindustrie anfallen, weiter verwertet werden.

Vorteilhafterweise besteht der Zuschlagstoff weiters aus einem hydraulischen Bindemittel in Form von Zement.

Als Zusatzstoffe im Sinne der Erfindung wird auch das im Zuschlagstoff vorliegende Wasser oder Kristallwasser verstanden. Dies deshalb, da bei hydraulischen Bindemitteln die Zusatzstoffe unter Einsatz von Wasser erhärten. Es ist daher niemals ausgeschlossen, dass auch nach dem Erhärtungsprozess Kristallwasser im Zuschlagstoff gebunden vorliegt. Als besonders bevorzugte Zusatzstoffe für das Erzielen einer Leichtgesteinskörnung erweisen sich Quell- und/oder Porenbildner.

Als Leichtgesteinskörnung im Sinne der Erfindung ist ein schalenartiger Aufbau des Zuschlagstoffes zu verstehen, welcher im Wesentlichen aus einem Kern und einem Randbereich besteht, wobei im Kernbereich vorranging das hydraulische Bindemittel in Form von Zement, im Randbereich hingegen das hydraulische Bindemittel in Form der Asche mit dem vorgenannten Kalziumoxidgehalt von 10 bis 20 % angelagert ist.

Weitere vorteilhafte Ausgestaltungen des Erfindungsgegenstandes sind gemäß Unteransprüche geoffenbart.

Die Erfindung betrifft weiters ein Verfahren zur Herstellung des erfindungsgemäßen Zuschlagstoffes, welches dadurch gekennzeichnet ist, dass in einem ersten Verfahrensschritt ein Großteil des hydraulischen Bindemittels in Form von Asche mit dem weiteren hydraulischen Bindemittel in Form von Zement unter Zugabe von Wasser sowie weiteren Zusatzstoffen wie Quell- und/oder Porenbildnern homogen vermischt wird, und dass in einem weiteren Verfahrensschritt unter Zugabe der verbleibenden Asche der Zuschlagstoff zur Leichtgesteinskörnung pelletiert wird.

Diesem ersten Pelletierschritt können vorteilhafterweise noch ein oder zwei Pelletierschritte nachgeschaltet werden, um Form und Oberfläche der Leichtgesteinskörnung entsprechend auszubilden. Weiters kann eine Trockenstufe dem oder den Pelletierschritten nachfolgen.

Vorteilhafterweise kann der Mischvorgang im ersten Verfahrensschritt in einer stationären Einheit, also in einem Betonwerk durchgeführt werden, wogegen die nachgeschalteten Pelletierschritte in einer mobilen Einheit, beispielsweise in einer in einem Seekontainer oder auf einem LKW gelagerten Pelletieranlage, durchgeführt werden können. Daraus ergibt sich der Vorteil, dass die stationäre Einheit durch das Mischverfahren ausgelastet ist, wogegen mittels der mobilen Einheit der erfindungsgemäßen Zuschlagstoff zu mehreren Produktionsstätten für die Betonherstellung geliefert werden kann.

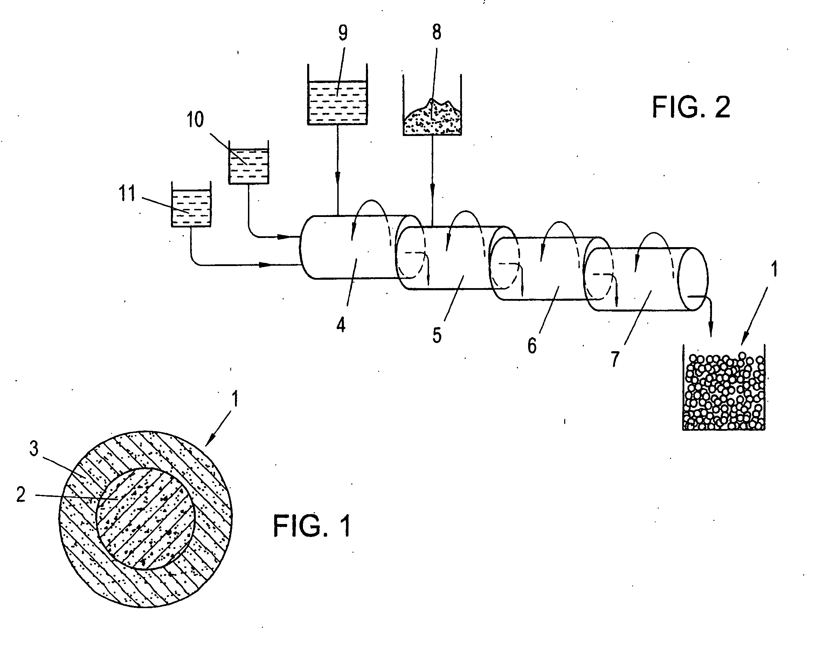

Die Erfindung wird im Folgenden anhand eines Ausführungsbeispieles zur Durchführung der Erfindung sowie anhand der Figurendarstellungen 1 und 2 näher erläutert, wobei Fig. 1 eine mögliche Ausführungsform des erfindungsgemäßen Zuschlagstoffes und Fig. 2 ein beispielhaftes Verfahrensschema zur Durchführung des erfindungsgemäßen Verfahrens zeigt.

Zur Durchführung des erfindungsgemäßen Verfahrens wird beispielsweise in einem Kaskaden- oder Freifallmischer 4, das hydraulische Bindemittel in Form von Asche vorgelegt. Dabei wird der Großteil der eingesetzen Asche, etwa 60 bis 70 Gew.-%, unter ständigem Rühren mit den in den Vorratsbehältern gelagerten weiteren Mischungskomponenten versetzt. So werden unter entsprechender Dosierung das weitere hydraulische Bindemittel, beispielsweise Zement 9, die Zusatzstoffe wie Wasser 10 sowie der Porenbildner 11 über Rohrleitungen zugeführt. Die Komponenten werden innig vermischt, was durch die Dosiergeschwindigkeit bzw. die Umdrehungszahl des Mischers gesteuert werden kann. Anschließend wird in der Pelletiereinheit 5 die restliche Asche 8 zugefügt. Es ist jedoch auch denkbar die Asche 8 auf die weiteren Pelletiereinheiten 6, 7 aufzuteilen, sodass in einem weiteren Pelletierverfahren Form und Oberfläche der Pellets entsprechend ausgebildet werden können.

Durch dieses Verfahren ergibt sich ein schalenförmiger Aufbau des erfindungsgemäßen Zuschlagstoffes 1, wie dieser beispielsweise in Fig. 1 in Form eines im Wesentlichen aus Zement bestehenden Kernbereiches 2 und eines vorwiegend aus Asche ausgebildeten Randbereiches 3 ausgebildet ist. Aus dem schalenartigen Aufbau der Leichtgesteinskörnung ergibt sich die vorteilhafte Verwendung des Zusatzstoffes zur Betonherstellung, welcher darin liegt, dass bedingt durch die hauptsächlich im Randbereich 3 angelagerten Aschepartikel die Zuschlagstoff-Pellets 1 nicht aneinander kleben. Weiters ist die Oberfläche bedingt durch die eingesetzen Aschepartikel sowie den eingesetzen Porenbildner so offenporig, dass bei weiterer Verwendung des Zuschlagstoffes 1 in der Betonproduktion eine zufriedenstellende Abbindung, d.h. Verzahnung dieser Pellets mit dem Zementleim des Betons gegeben ist.

Weiters lässt sich zusammenfassend sagen, dass der in dem hydraulischen Bindemittel in Form von Asche vorliegende Freikalkgehalt von 10 bis 20 Gew.- % insbesondere für den Pelletierprozess von wesentlicher Bedeutung ist, da der relativ hohe Gehalt an Kalziumoxid eine rasche Reaktion mit dem weiteren hydraulischen Bindemittel, nämlich Zement, mit sich bringt, sodass der erfindungsgemäße Zuschlagstoff in wenigen Minuten lagerfähig ist. Zusätzlich kann der Pelletierprozess unabhängig vom stationären Mischprozess mobil gestaltet werden, sodass die erfindungsgemäß hergestellten Zuschlagstoffe zu mehreren Produktionseinheiten für die Betonproduktion geliefert werden können.

## Patentansprüche

1. Zuschlagstoff mit Leichtgesteinskörnung (1) für die Betonherstellung bestehend aus einem oder mehreren Zusatzstoff (en) sowie einem hydraulischen Bindemittelgemisch, in welchem Asche (8) mit einem Kalziumoxidanteil (Freikalkanteil) von 10 bis 20 Gew.- % bezogen auf 100 Gew.- % Asche vorliegt, **dadurch gekennzeichnet, dass** die Leichtgesteinskörnung einen schalenartigen Aufbau zeigt, wobei im Kernbereich (2) vorwiegend Zement und im Randbereich fast ausschließlich Asche vorliegen.

2. Zuschlagstoff nach Anspruch 1, **dadurch gekennzeichnet, dass** das hydraulische Bindemittel in Form von Asche (8) aus der Rinden- oder Holzverbrennung gewonnen wird.

3. Zuschlagstoff nach Anspruch 1 oder 2, **dadurch gekennzeichnet, dass** als weiteres hydraulisches Bindemittel Zement (9) vorliegt.

4. Zuschlagstoff nach einem der Ansprüche 1 bis 3, **dadurch gekennzeichnet, dass** das Verhältnis Asche:Zement gleich 1:1 ist.

5. Zuschlagstoff nach einem der Ansprüche 1 bis 4, **dadurch gekennzeichnet, dass** als weitere(r) Zusatzstoff(e) Quell- und/oder Porenbildner (11) eingesetzt werden (wird) .

6. Zuschlagstoff nach Anspruch 5, **dadurch gekennzeichnet, dass** der Anteil an Zusatzstoff(en) in einem Bereich von 0,1 bis 20 Gew.-% bezogen auf 100 Gew.-% Zuschlagstoff liegt.

7. Zuschlagstoff nach einem der Ansprüche 1 bis 6, **dadurch gekennzeichnet, dass** die Leichtgesteinskörnung in Form von Kugeln oder Pellets (1) vorliegt.

8. Zuschlagstoff nach einem der Ansprüche 1 bis 7, **dadurch gekennzeichnet, dass** der Zuschlagstoff eine Rohdichte von 500 bis 2000 kg/m³ aufweist.

9. Verfahren zur Herstellung eines Zuschlagstoffes nach einem der Ansprüche 1 bis 8, **dadurch gekennzeichnet, dass** in einem ersten Verfahrensschritt der Großteil an Asche (8) mit dem weiteren hydraulischen Bindemittel wie Zement (9) sowie gegebenenfalls Zusatzstoffen (11) homogen vermischt, dass in einem zweiten Verfahrensschritt die Leichtgesteinskörnung des Zuschlagstoffes (1) durch Pelletieren ausgebildet wird und dass der verbleibende Anteil an Asche (8) in einem oder mehreren nach dem ersten Pelletierschritt nachgeschalteten Schritten zugegeben wird.

10. Verfahren nach Anspruch 9, **dadurch gekennzeichnet, dass** das Mischverfahren in einer stationären Einheit und das der Pelletierschritt oder die Pelletierschritte in mobilen Einheiten durchgeführt werden.

## Claims

1. Aggregate with a light rock granulation (1) for the production of concrete comprising one or more aggregate(s) as well as a hydraulic binder mixture, in which ash (8) is contained with a proportion of calcium oxide (free lime) of 10 to 20% by weight calculated on the basis of 100% by weight of ash,
**characterised in that** the light rock granulation exhibits a shell-like structure, wherein predominantly cement is present in the core region (2) and almost exclusively ash is present in the edge region.

2. Aggregate according to Claim 1, **characterised in that** the hydraulic binder in the form of ash (8) is obtained from burning bark and wood.

3. Aggregate according to Claim 1 or 2, **characterised in that** cement (9) is present as a further hydraulic binder.

4. Aggregate according to one of Claims 1 to 3, **characterised in that** the ratio of ash to cement is equal to 1 : 1.

5. Aggregate according to one of Claims 1 to 4, **characterised in that** expanding agent and/or pore forming material (11) is (are) added as further additive(s).

6. Aggregate according to Claim 5, **characterised in that** the proportion of additive(s) lies in a range of 0.1 to 20% by weight calculated on the basis of 100% by weight of additive.

7. Aggregate according to one of Claims 1 to 6, **characterised in that** the light rock granulation is in the form of spheres or pellets (1).

8. Aggregate according to one of Claims 1 to 7, **characterised in that** the aggregate has a bulk density of 500 to 2000 kg/m³.

9. Process for the production of an aggregate according to one of Claims 1 to 8, **characterised in that** in a first process step the greater proportion of the ash (8) is homogeneously mixed with the further hydraulic binder such as cement (9) and also possibly additives (11), that in a second process step the light rock granulation of the aggregate (1) is formed by pelletising, and that the remaining proportion of ash (8) is added in one or more steps subsequent to the first pelletising step.

10. Process according to Claim 9, **characterised in that** the mixing process is conducted in a stationary unit and that the pelletising step or the pelletising steps is/are conducted in mobile units.

## Revendications

1. Granulat présentant une granulation de roche légère (1) pour la fabrication de béton, comportant un ou plusieurs additifs, ainsi qu'un mélange de liants hydrauliques, qui contient de la cendre (8) avec une part d'oxyde de calcium (part de chaux libre) comprise entre 10 et 20% en poids par rapport à 100 % en poids de cendre, **caractérisé en ce que** la granulation de roche légère présente une constitution en forme de coquille, du ciment étant principalement contenu dans la zone du coeur (2) et de la cendre étant presque exclusivement contenue dans la zone du bord.

2. Granulat selon la revendication 1, **caractérisé en ce que** le liant hydraulique en forme de cendre (8) est le produit de la combustion d'écorces ou de bois.

3. Granulat selon l'une des revendications 1 ou 2, **caractérisé en ce qu'**il contient du ciment (9) comme autre liant hydraulique.

4. Granulat selon l'une des revendications 1 à 3, **caractérisé en ce que** la proportion entre la cendre et le ciment est de 1 à 1.

5. Granulat selon l'une des revendications 1 à 4, **caractérisé en ce qu'**un agent gonflant et/ou un agent porogène sont utilisés comme autres additifs.

6. Granulat selon la revendication 5, **caractérisé en ce que** la part d'additifs se situe dans une plage comprise entre 0,1 à 20 % en poids par rapport à 100% en poids de granulat.

7. Granulat selon l'une des revendications 1 à 6, **caractérisé en ce que** la granulation de roche légère est en forme de billes ou de pastilles (1).

8. Granulat selon l'une des revendications 1 à 7, **caractérisé en ce que** le granulat présente une masse volumique apparente comprise entre 500 à 2000 kg/m3.

9. Procédé de fabrication d'un granulat selon l'une des revendications 1 à 8, **caractérisé en ce que**, au cours de la première étape du procédé, la plus grande partie de la cendre (8) est mélangée de manière homogène au liant, par exemple à du ciment (9), ainsi que, le cas échéant, à des additifs (11),et **en ce que**, au cours de la seconde étape du procédé, la granulation de roche légère du granulat (1) est obtenue par transformation en pastilles et que la part de cendre (8) restante est ajoutée en une ou plusieurs étapes prévues en aval de la première étape de transformation en pastilles.

10. Procédé selon la revendication 9, **caractérisé en ce que** le procédé de mélange a lieu dans une unité stationnaire et que l'étape ou les étapes de transformation en pastilles ont lieu dans des unités mobiles.
